# NEW EUROPEAN PATENT SPECIFICATION

(11) **EP 1 726 513 B2**
(45) Date of publication and mention of the opposition decision: **13.09.2017**
(45) Mention of the grant of the patent: 09.04.2014
(21) Application number: 06113299.9
(22) Date of filing: 28.04.2006
(51) Int. Cl.: B60W 30/12, B60W 30/18, B62D 15/02

(54) **Driving assistance system for lane keeping support, for lane change assistance, and for driver status monitoring for a vehicle**
Fahrerassistenzsystem zur Unterstützung der Spurhaltung, zur Spurwechselassistenz, und zur Fahrerzustandserfassung für ein Fahrzeug
Système d'assistance au conducteur pour aider à la tenue de route, pour l'assistance au changement de voie, et surveillance de l'état du conducteur dans un véhicule

(30) Priority: 02.05.2005 IT MI20050788
(43) Date of publication of application: 29.11.2006
(73) Proprietor: IVECO S.p.A., 10156 Torino (IT)
(72) Inventor: Montiglio, Mauro, 15033 Casale Monferrato (IT); Murdocco, Vincenzo, 10151 Torino (IT); Consano, Ludovico, 10023 Chieri (IT); Antonello, Pier Claudio, 10064 Frossasco (IT)
(74) Representative: Franzolin, Luigi

(56) References cited:
- EP-A- 1 500 574
- EP-A- 1 508 819
- WO-A-2005/025917
- DE-A1- 10 212 985
- US-A1- 2003 096 593
- US-A1- 2004 061 596
- US-A1- 2004 215 393
- US-A1- 2004 262 063
- US-A1- 2005 030 184

## Description

The present invention relates to a driving assistance system for vehicles and more in particular to a driving assistance system for vehicles both during normal driving along a reference lane and during lane-change manoeuvres.

Driving assistance systems for vehicles are known in the art.

For example, EP-1336550 and EP-806336 describe driving assistance systems for vehicles, designed to prevent involuntary exit from a traffic lane, due for example to lack of attention of the driver. Said systems can intervene by applying an active torque to the device for steering control, in order to suggest to the driver the appropriate corrective action.

EP-1312506, instead, describes a driving assistance system designed to assist the driver in lane-change manoeuvres by warning of potential danger, for example vehicles that are approaching in the adjacent traffic lanes, with which the assisted vehicle could come into collision during the lane-change manoeuvre.

US-2004/0061596-A1 shows a driving assist system which is able to influence the way of operating of the servo-steering device and the servo-accelerator device. The system estimates the risk potential in the longitudinal direction for the control of the servo-accelerator device, and the risk potential in the lateral direction for the control of the servo-steering device, in such a way as the two control signals for these two devices are generated with reciprocal delays for avoiding risky situations for the driver. Said known solutions, afford limited levels of assistance to driving and hence are insufficient to guarantee a complete assistance in all risky driving situations. US 2005/030184 is considered as the closest prior art and discloses a lane keeping-support-module having a front-vision system, a lane change assistance module, a driver status monitoring module having a vision system, a decision control module processing signals from the lane keeping support module, the lane change assistance module and driver status monitoring module for applying an active steering torque, supply warning signals and for determining the operation of an active steering system, an adaptive cruise control system, infotainment system, and acoustic and visual warning device.

Consequently, the purpose of the present invention is to indicate a complete driving assistance system for vehicles obtained by means of implementation of a decision control module (DCM), namely a system for assisting the driver of a vehicle both during normal driving along a given lane, and during lane-change manoeuvres, in which the assistance can be supplied by applying a given steering torque, which is processed, when the vehicle is proceeding along a certain lane, by means of a lane-keeping-support module (LKSM), which processes the information coming from a lane-tracking system (LTS) based upon a front video camera, whilst in the case of lane-change manoeuvres, the assistance is supplied by means of a lane-change-assistance module (LCAM), which processes the information coming from a lateral-lane-monitoring system (LLMS) based upon a video camera facing the lateral lane.

Furthermore, in order to improve the effectiveness and functionality of the system, this can be extended by means of a driver-status-monitoring module (DSMM), which processes the information coming from a driver-eye-monitoring system (DEMS) inside the cab or the passenger compartment, which frames the eyes of the driver, detecting the direction of his glance in order to recognize the state of drowsiness or distraction of the driver so that the decision module DCM of the driving assistance system will be able to implement different types of intervention, for example automatically activate the function of aid to lane-keeping (LKSM). Instead, when it is necessary, the system can automatically deactivate other systems, such as for example adaptive control of the cruising speed (adaptive cruise control - ACC).

Preferably, the lane-keeping-support module (LKSM) can prevent unintended deviations of the vehicle from the lane of travel by supplying an appropriate steering intervention, which enables the driver to correct the path of the vehicle when there is detected an imminent exit from the traffic lane, whereas the lane-change-assistance module (LCAM) enables prevention of the condition of emergency generated by the approach of another vehicle along the lane, towards which the vehicle performing the lane change is moving, by means of an appropriate steering intervention, i.e., by applying an active steering torque that inhibits the driver from performing a lane-change manoeuvre in dangerous conditions.

The active steering torque is preferably applied by means of electronic-control steering systems, and, for applications on heavy lorries, is preferably supplied by a servo electric power-steering unit (EPS) coupled to a servo hydraulic power-steering unit (HPS).

A particular subject of the present invention is a driving assistance system for vehicles as described in claim **1, and in the dependent claims,** which form an integral part of the present description.

The purposes and advantages of the present invention will emerge clearly from the ensuing detailed description of an example of embodiment thereof (and of its variants) and from the annexed plate of drawings, which is provided purely by way of explanatory and non-limiting example and in which:
- **Figure 1** represents a block diagram of the driving assistance system forming the subject of the present invention;
- **Figure 2** represents a functional block diagram of the lane-keeping-support module LKSM;
- **Figure 3** illustrates a block diagram of the electrical/electronic and mechanical architecture of the system LKS;
- **Figure 4** illustrates the operative flow of the module LKSM;
- **Figure 5** illustrates the input and output variables of the algorithm of the module LKSM;
- **Figure 6** illustrates a functional block diagram of the module DSMM;
- **Figure 7** illustrates a diagram of the field of vision typical of the module LCAM;
- **Figure 8** illustrates an example of a rearview mirror modified in accordance with the invention;
- **Figure 9** illustrates a functional block diagram of the module LCAM; and
- **Figure 10** illustrates a functional block diagram of the decision control module DCM.

The same reference numbers and wordings in the various figures identify the same components or functionally equivalent components, elements or quantities.

The system forming the subject of the invention is now described in detail with reference to its principal constituent modules.

### Lane-keeping-support module LKSM

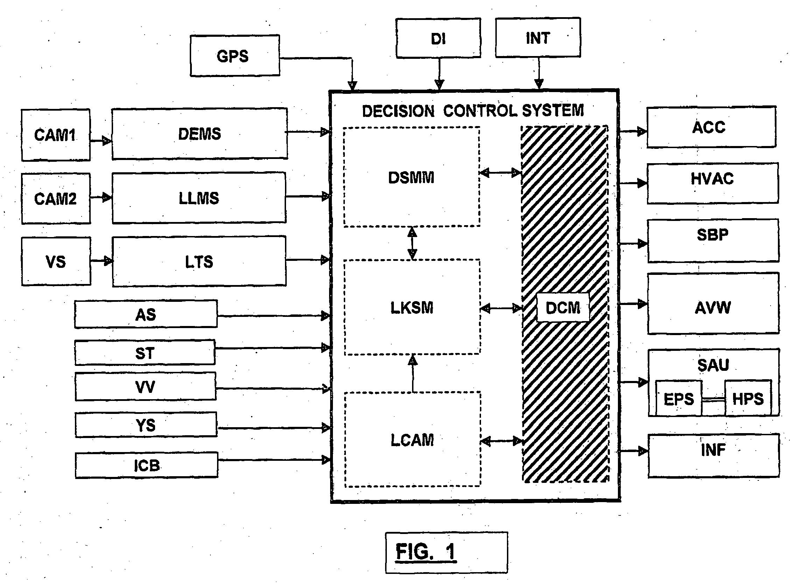

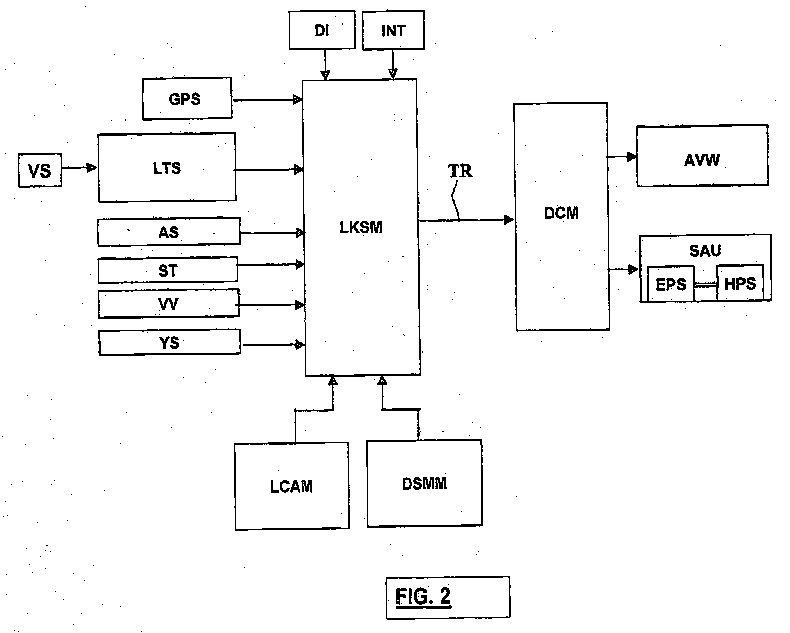

With reference to Figures 1 and 2, the lane-keeping-support module LKSM performs the function of providing assistance to the driver so as to prevent involuntary lane change due for example to lack of attention, i.e., distraction or drowsiness on the part of the driver. This part of the system is strictly integrated with the other two modules of the system, i.e., the lane-change assistance module LCAM and the driver-state-monitoring module DSMM.

The main aim of the module LKSM is to provide assistance for lane keeping, by supplying a torque-request signal TR to the decision control module DCM, on the basis of one or more of the following criteria:
- using the information on the instantaneous position and direction of the vehicle regarding the lane markings, or the road borders, detected by a lane-tracking system LTS, which processes images supplied by a front camera, preferably installed within the cab behind the area of the windscreen swept by the windscreen wipers;
- using sensors for detecting activation of the direction indicators;
- processing the information referred to above so as to calculate an appropriate active torque to be applied by means of a steering actuator when the signals issued by the system LTS indicate that the vehicle is about to leave the lane and the direction indicators are not activated;
- using the information coming from the module LCAM so as to establish whether a lane-change manoeuvre can be undertaken in a safe way; and
- processing the information from the module LCAM and calculating an appropriate active torque to be applied by means of the steering actuator, thus inducing the driver to keep on the lane where he is travelling, even though the direction indicators have been activated, in the case where the module LCAM has detected a condition that is dangerous for the lane-change manoeuvre.

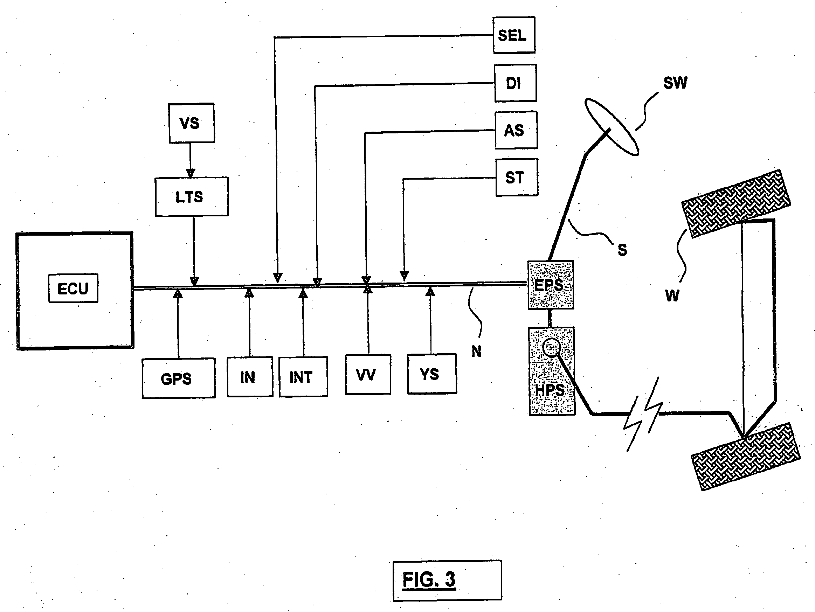

With reference to **Figures 2** and **3****,** a steering-actuation unit SAU is preferably provided on commercial vehicles by means of an electrical power-steering unit EPS associated to the steering column S and coupled to a hydraulic power-steering unit HPS. The steering system includes an electric motor and sensor devices for supplying electrical signals of the steering angle AS and of the steering torque ST that the driver applies to the steering column. The reference SW designates the driver's steering wheel, and W designates the wheels that steer the vehicle.

In a known way, the vehicle has direction indicators DI, which can be activated in a selective way, for example by means of a manual lever, so as to indicate a change of direction. The direction-indicator device DI includes a sensor for supplying electrical signals that indicate whether the direction lights are activated or not. The sensor can be shared with other control systems installed on the vehicle.

The vehicle is equipped with a driving assistance system according to the invention, which includes a lane-tracking system LTS for supplying electrical signals that can be used to identify the instantaneous position and direction of the vehicle in relation to the lane markings, or the road borders, which limit laterally or define the lane or the road along which the vehicle is travelling. The system comprises a lane vision system VS, which includes a camera facing the road in front of the vehicle, in association with an electronic device for processing the images generated by the camera.

The driving assistance system moreover comprises a sensor VV for supplying electrical signals indicating the speed of the vehicle. Said sensor can be shared with other on-board systems.

A processing unit ECU of the driving assistance system forming the subject of the invention is connected to the steering-angle sensor AS, associated to the steering column S, to the direction-indicator sensor DI, to the lane-tracking system LTS, to the vehicle-speed sensor W, to the lateral-acceleration sensor and yaw-velocity sensor YS.

The processing unit ECU can, for example, be connected to these sensors by means of a communication network N, such as for example a network that operates with the CAN protocol.

The processing of the lane-keeping-support module LKSM can be performed by the main microprocessor in the decision control system ECU, in common with the modules LCAM and DSMM, but can be performed also by a separate microprocessor.

Sensors and transducers YS for measuring the lateral dynamics of the vehicle, comprising a lateral-acceleration sensor and a yaw-velocity sensor, are also connected to the processing unit by means of the network N. These sensors can be shared with other control systems installed on the vehicle.

The processing unit of the module LKSM controls the steering-actuation unit SAU in such a way as to apply an active torque of a given value to the steering actuator when the signals issued by the lane-tracking system LTS and by the other sensors indicate that the vehicle is about to leave the lane in which it is travelling and the direction indicators are not activated.

Similarly, when the module LCAM, described in the following, detects a dangerous situation, even though the direction indicators are activated, an active torque of a given value is applied to the steering actuator, by means of the processing unit, so as to induce the driver to keep on the same lane, thus preventing a dangerous lane change.

Application of this active torque gives the driver a sensation of resistance to the deviation from the lane in terms of a resisting torque on the steering wheel. The active torque likewise provides an intuitive indication of the steering action requested to get the vehicle to return within the limits of the desired lane.

On the other hand, the function performed by the module LKSM is disabled, albeit ready for use, if the driver activates a direction indicator with the deliberate intention of changing lane. Instead, the function is not disabled, even though the driver activates an indicator, when the module LCAM detects an imminent danger in lane change.

The processing unit calculates the radius of curvature of the portion of road on which the vehicle is travelling. This operation is performed using signals issued by the vision system VS. On the basis of this information, the unit ECU of the module LKSM calculates the active torque to be applied to the steering column S, on the basis of various methods, according to whether the portion of road along which the vehicle V is travelling is basically straight or curved.

The unit ECU can also be pre-arranged not only to analyse the signals issued by the vision system VS, which is able to recognize multiple lanes, also including the adjacent lanes, but also to receive information from a satellite global positioning system GPS, and process the information of the maps of the GPS system regarding the types of road along which the vehicle is travelling (motorway, trunk road, main and secondary roads, etc.) and the number of lanes. In this case, it is advantageous if the resisting torque that would have to be applied to the steering column S is calculated on the basis of a variety of methods, depending upon which lane the vehicle is travelling along (intermediate, left-hand, right-hand).

In each of these cases, the active torque that it would be necessary to apply on the steering column S is preferably calculated according to the transverse position and instantaneous direction of the vehicle within the traffic lane.

In calculating the value of active torque to be applied to the steering actuator, it is preferable to take into account at least one set of parameters comprising the speed of the vehicle, the yaw velocity and the transverse acceleration. For commercial vehicles it is preferable to take into account also the value of the load, and for heavy commercial vehicles it is preferable to take into account also the presence of a trailer or semitrailer. This information can be supplied by sensors shared with other control systems of the vehicle and accessible by means of a network operating, for example, with the CAN protocol.

It is also preferable if the active torque to be applied to the steering actuator is calculated according to the value of the maximum torque set by the driver using an interface SEL, such as for example a selector, a push-button or the like, to enable the driver to personalize the level of torque for intervention on the steering.

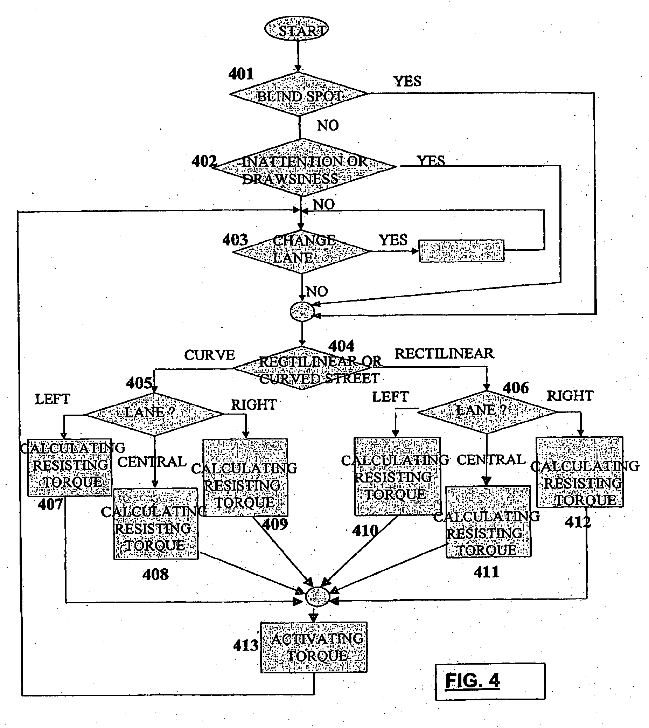

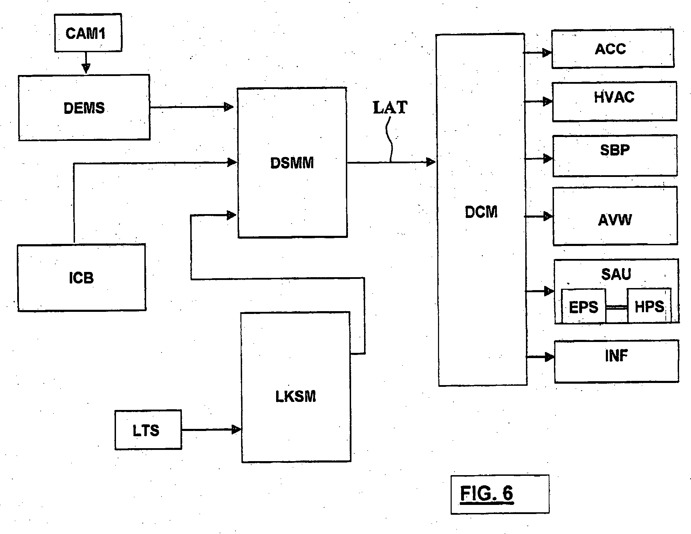

A further parameter that the processing unit can use for calculating the active steering torque is the camber of the portion of road on which the vehicle is travelling. The camber can be calculated on the basis of signals of transverse acceleration, or by means of an inclinometer IN, or by means of information coming from a satellite global positioning system GPS and an appropriate digital map provided with this detailed information. The flowchart of **Figure 4** shows the logical sequence of the main operations carried out by the module LKSM. It may be noted that the module LKSM in the step 401 verifies whether an alarm of a "blind spot" type, described in the following, has been issued by the module LCAM, or whether, in step 402, a "state of distraction or drowsiness" alarm has been detected by the module DSMM. If no alarms have been issued, the system verifies, in step 403, the condition of "intention to change lane" of the driver, or more generally of leaving the lane on which he is travelling. This is done by verifying whether the direction indicators have been activated or not. Furthermore, the intention of the driver to change lane can also be identified by a system for monitoring the eyes and face of the driver DEMS (**Figures 1** and **6**), which is able to detect the direction of his glance, and in particular his glance when he is facing the rearview mirrors.

If the module LKSM recognizes that it is necessary to intervene in the case of intention not to change lane, then, in step 404, it selects a different strategy of control depending upon whether the vehicle is travelling along a rectilinear or a curved stretch of road. If the portion of road comprises a plurality of lanes, the system determines, in step 405 or step 406, in which lane the vehicle is travelling (for example, right-hand lane, left-hand lane or central lane), and then determines the torque to be applied to the steering wheel, in one of the corresponding steps from 407 to 412. Next, in step 413, it processes and sends to the module DCM (**Figures 1** and **2**) a request of active torque TR to be applied on the steering.

The active steering torque is calculated according to other parameters or values, such as:
- instantaneous position and direction of the vehicle with respect to lane marking or road border signs detected;
- speed of the vehicle;
- radius of curvature of the lane;
- camber of the portion of road on which the vehicle is travelling;
- signals regarding the lateral dynamics of the vehicle, comprising yaw velocity and lateral acceleration;
- mass of the load and presence of a trailer;
- maximum active torque set by the driver for actuation of the steering unit;
- instantaneous steering torque applied by the driver; and
- number of lanes and information on the type of road on which the vehicle is travelling, if available by means of a navigation system.

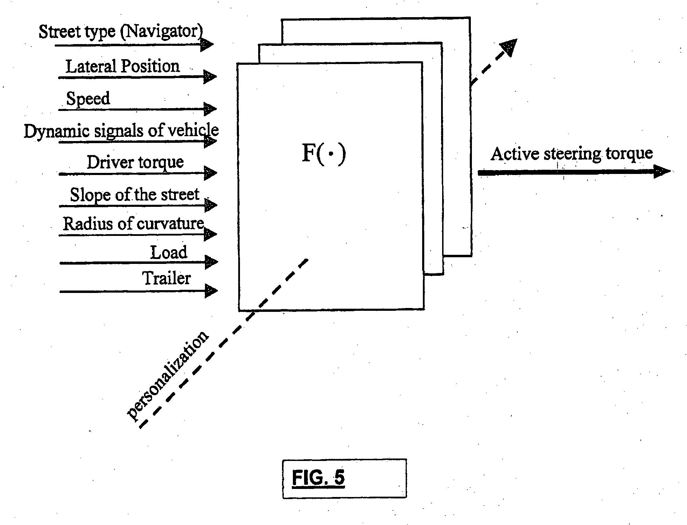

**Figure 5** shows the input and output variables of the algorithm for processing the active steering torque of the module LKSM.

In addition, the module LKSM processes the information regarding the presence of the hands of the driver on the steering wheel. The information that the driver has taken his hands off the steering wheel for a certain time can be used by the module DCM to generate a specific alarm for the driver.

The possibility of detecting the presence of hands on the steering wheel also enables an improvement in the strategies of actuation of active steering.

The above detection can be made from a comparison of the steering torque applied by the driver and its time derivative with an appropriate torque threshold value and torque-derivative threshold value, respectively. The absence of the hands from the steering wheel is detected in the case where the torque applied by the driver and its time derivative remain both simultaneously below the aforesaid threshold values for a certain pre-set period of time. Unlike the systems according to the prior art, in which the presence of the driver's hands on the steering wheel is recognized by sensors of various types (pressure sensors, contact sensors, optical sensors, etc.) set on the crown of the steering wheel, the invention is of simpler implementation and entails modest additional costs. Processing of the values of steering torque moreover enables recognition also that particular situations of danger have arisen, such as execution of emergency manoeuvres or sudden release of the steering wheel by the driver.

Finally, the module LKSM, on the basis of the information coming from the lane-tracking system LTS, processes information regarding the "driving style" of the driver, identifying improper behaviour, such as for example an excessively imprecise style of driving; said evaluation can be carried out, for example, by observing a frequent number of interventions of the LKS in a given time interval.

### Driver-status-monitoring module DSMM

It is known that lack of attention, which comprises both distraction and drowsiness, is a common cause of accidents. The problem is normally classified as visual distraction or else cognitive distraction and drowsiness.

Visual distraction occurs, for instance, when the driver must read or write a long SMS message on the phone. Cognitive distraction may arise during an important telephone conversation, or if the driver is seriously involved in solving a problem. In both cases, the camera for the driver monitoring can detect when the level of lack of attention becomes dangerous. For example, the system can detect that the driver is busy too long or too often with the radio and is paying little attention to the road, or else that he is gazing in front of himself without really seeing, because for example he is mentally concentrating on a problem and his attention has been distracted from driving.

The state of the art of systems for monitoring driver drowsiness consists in supplying a signal warning of danger when a dangerous condition is detected. The danger warning may be acoustic or else supplied by vibration devices, for example, causing vibration of the seat, or else visual by means of LEDs, or else light icons, or messages flashing on the dashboard.

The subject of this part of the invention is a driver-status-monitoring module DSMM, which supervises lack of attention of the driver from his driving task, so as to supply to the decision module DCM a signal LAT regarding an evaluation of the level of attention of the driver. On the basis of said information, the module DCM can decide to intervene to recall the driver's attention or else to assist him by activating or deactivating other on-board systems. The purpose of the module DSMM is to prevent certain situations of danger caused by lack of attention, for example involuntary exit from the traffic lane or lane changes performed in conditions of danger due to the risk of collision with vehicles in adjacent lanes. The module DSMM is integrated with the other two modules LKSM and LCAM (Figure 1).

With reference to **Figure 6****,** the module DSMM receives information from the system for monitoring the driver's eyes and face DEMS, which is able to follow the movements of the driver's eyes or the direction of his glance and blinking rate so as to detect drowsiness. On the basis of this information, the module can supply a danger signal if the driver is not paying sufficient attention to driving or can supply an alarm if it recognizes a state of drowsiness. The system is based upon a camera CAM1 inside the cab, which recognizes the movement of the driver's eyes.

In addition, the module DSMM receives other information (block ICB), for example available via a communication network (CAN network) of the vehicle, regarding the use of on-board devices, such as primary and secondary commands, navigation system, radio, telephone, computer, etc., which may distract the driver.

Whereas known methods for detecting the state of drowsiness of the driver are based only upon recognition of the duration of closing or frequency of blinking of the eyes, the system forming the subject of the invention integrates three different sources:
1) recognition of the direction of the face and of the glance;
2) information available on the CAN communication network of the vehicle, on which messages are available regarding the possible use of any on-board device; and
3) information coming from the lane-tracking system LTS, via the block LKSM, which can also be used for recognizing improper driving behaviour, such as an excessively imprecise style of driving, which can be detected by observing, for instance, the frequency of interventions of the LKSM, and comparing it with
   an appropriate threshold value.

The advantage of this new approach is a more reliable and more complete recognition of the lack of attention of the driver. In particular, the information that derives from the lane-tracking system LTS, via the block LKSM, can provide a reliable evaluation on the driver's driving style, and hence recognize anomalous, improper or dangerous driving behaviour. On the other hand, the systems based only upon a telecamera for monitoring the driver can be insufficient in certain conditions, for example in difficult conditions of lighting of the cab or else when the driver is wearing spectacles.

Following upon detection by the module DSMM of a state of lack of attention, the decision control module DCM, as specified in greater detail in the following, can intervene both by generating acoustic or visual warnings of danger AVW, and by activating or deactivating other on-board systems, thus inducing the driver to recover his concentration on the task of driving.

In practice, the present driving assistance system can intervene with different modalities, as explained in greater detail hereinafter in the description of the decision control module DCM. This multiplicity of modalities of intervention constitutes a distinctive element of the present invention.

### Lane-change-assistance module LCAM

The function of the module LCAM is to assist the driver in lane-change manoeuvres, by warning of risk conditions generated by the approach of another vehicle in the adjacent lane without the driver realizing it (alarm of a "blind spot" type, as mentioned previously), so as to prevent the driver from performing a lane-change manoeuvre in conditions of risk and hence preventing possible collision.

The module LCAM is functionally interfaced with the other two modules DSMM and LKSM.

In order to provide a lateral-lane-monitoring system, an external opto-electronic sensor is used, preferably integrated in the rearview mirror driver side, which supplies an output signal designed to detect the presence and movement of another vehicle in the adjacent lane and to detect the lateral movements of the vehicle with respect to the lane demarcation lines.

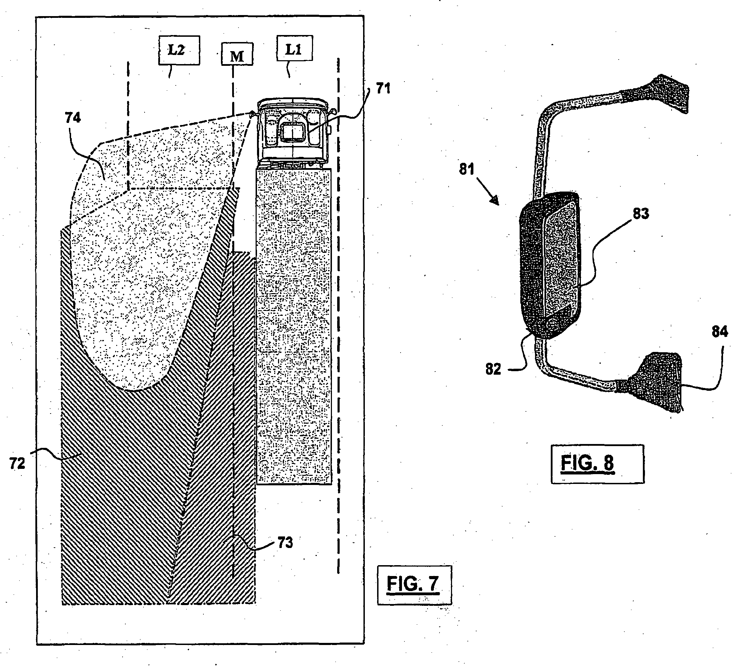

The area supervised by the opto-electronic sensor is illustrated in **Figure 7**, where also illustrated are the areas supervised by the rearview mirrors driver side of a heavy vehicle 71, namely a class-IV wide-angle mirror (area 72) and a class-II rearview mirror (area 73), as prescribed by the European directive 2003/97/EC.

With reference to **Figure 8****,** a vehicle has an external rearview mirror 81 in which an opto-electronic sensor is incorporated consisting of a digital camera CAM2 82 in CMOS technology. The camera 82 may be integrated in the body of the mirror 83 or in its support 84. The camera has a field of vision defined by the area 74 of **Figure 7****,** which has a wider field of vision than the conventional rearview mirrors, designated by 72 and 73 in the figure.

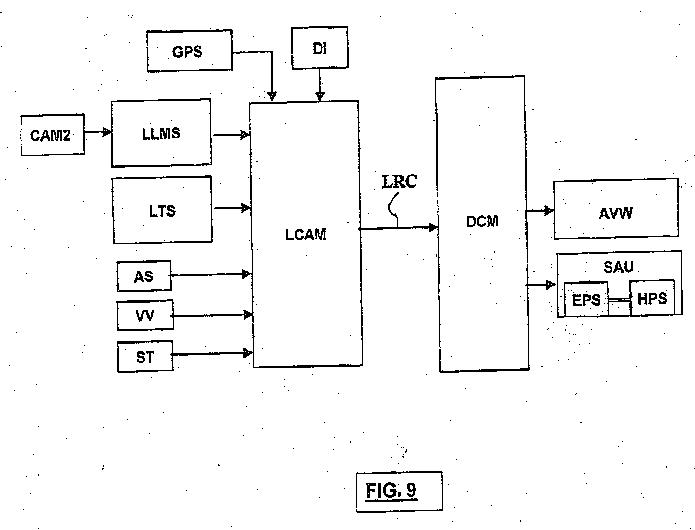

With reference to **Figure 9****,** the module LCAM uses the information supplied by the lateral-lane-monitoring system LLMS and by the lane-tracking system LTS. After correlating this information with parameters regarding the dynamics of the vehicle, the module determines a signal LRC regarding a level of risk of lateral collision with possible vehicles in the overtaking lane and supplies it to the block DCM.

The module LCAM uses the following parameters:
- position and direction of the vehicle with respect to the lane of travel L1;
- presence and relative speed of another vehicle that is approaching on the adjacent lane L2;
- longitudinal speed of the vehicle VV;
- steering angle AS and steering angular velocity;
- activation of the direction indicators DI; and
- steering torque ST applied by the driver.

When the lateral-lane-monitoring system LLMS detects simultaneously a lateral approach of the vehicle to the lane marking M and also the approach of another vehicle along the adjacent lane L2, the module LCAM processes the level of risk of lateral collision and sends this information to the module DCM, which decides on the appropriate interventions, which range from a simple acoustic or visual warning to active intervention on the steering, according to the level of risk.

This device improves the driving safety as compared to what can be obtained using traditional rearview mirrors, which leave a part of the area at the side of the vehicle, the so-called blind angle, out of the field of vision. The device uses a video camera integrated in the rearview mirror as opto-electronic sensor, which, as compared to traditional rearview mirrors, achieves a better lateral monitoring in so far as it also carries out detection of obstacles and makes it possible an active intervention.

The module LCAM assists the lane-change manoeuvres, warning of the condition of risk generated by the approach of another vehicle along the same lane as the one into which the vehicle would move by changing lane, and has the following characteristics:
- it is equipped with opto-electronic sensor means, for example a telecamera of a CMOS type, on the external rearview mirror of the vehicle;
- it processes the signals issued by the sensors to detect a set of variables, amongst which the position of the vehicle with respect to the closest side of the lane of travel;
- it processes the signals issued by the sensors to detect when a vehicle that is following is approaching on the lane adjacent to the one on which the vehicle is travelling; and
- it determines the level of risk of collision with the vehicle in the adjacent lane.

The sensors typically consist of a digital video camera CAM2 preferably a colour one. The use of a colour video camera renders the signal stronger and improves the capacity of operating correctly in all environmental conditions to eliminate any disturbance due, for instance, to shadows of other surrounding objects. The current technology of digital cameras enables their integration in the rearview mirror of the vehicle or in any case in the body of the mirror or else on its support. A further advantage is that said electronic processing means may be completely digital. The device can be connected to the on-board network to simplify the electrical connections.

As a further degree of functionality, the electronic processing means may comprise various other functions such as, for example, warning of other vehicles that are overtaking the stationary vehicle or else warning of other vehicles that are overtaking at a low speed, for example, less than 25 km/h, or else detection of vehicles that are approaching from behind at night and automatic activation or deactivation of the vehicle lights.

The signals issued by the sensor CAM2 are supplied to the electronic processing circuit LLMS. The circuit executes a series of operations, such as, for example, estimation of the distance between the vehicle itself and a vehicle that is arriving behind, during overtaking. According to the invention, the electronic processing means LLMS are moreover able to estimate the lateral distance between the vehicle itself and the adjacent side M of the lane L1 on which the vehicle is travelling, by means of appropriate image processing.

### Decision control module DCM

The modules LKSM, LCAM and DSMM described previously are integrated with a further module called decision control module (DCM), which has a higher hierarchical level and is responsible for all the decisions taken by the system, whether in the form of warnings or in the form of active interventions.

The decision control module DCM constitutes the heart of the driving assistance system and is responsible for all the possible interventions of the system, which can assume either the form of (acoustic and/or visual) warnings or the form of actuation of the steering system or of other on-board systems.

The module DCM is interfaced with the following modules described above:
- module LKSM, from which it receives a request for active steering torque;
- module LCAM, from which it receives an evaluation of the level of risk of lateral collision; and
- module DSMM, from which it receives an evaluation of the level of attention of the driver.

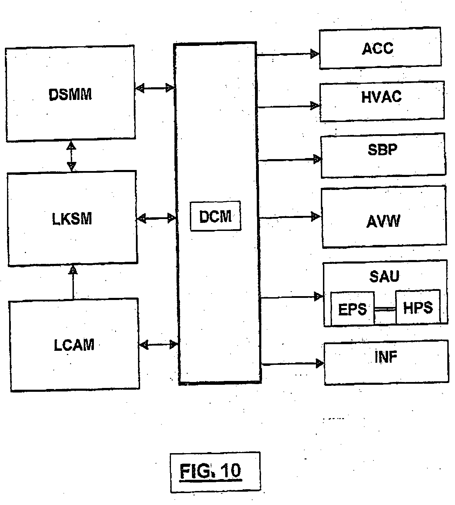

Furthermore, since the module DCM is responsible for all the interventions of the driving assistance system, it contributes to determining operation of one or more of the following on-board systems, as shown in **Figure 10**:
- active steering system SAU;
- adaptive-cruise-control system ACC;
- heating-ventilation-air-conditioning-control system HVAC;
- electrical-safety-belt-pretensioning system SBP;
- infotainment system (radio, hi-fi, handsfree-talking telephone, etc.) INF; and
- acoustic-and-visual-warning devices AVW.

On the basis of the information received, in addition to being able to issue appropriate warning signals of an acoustic or visual nature, the module DCM can take the decision of activating or deactivating some on-board systems and in particular it can intervene by enabling or disabling the support supplied to the driver by the modules LKSM and LCAM, according to a series of pre-defined rules. By way of non-limiting example, listed in Table 1 below are some of the most important decisions of intervention that the module DCM can make to increase the level of vehicle safety.

For example, described in the first row of the table is the type of decision taken by the module DCM in the following situation: the module LKSM is not active, i.e., the function lane-keeping-support LKS has not been activated by the driver; the module LCAM has not detected any dangerous vehicle on the left-hand side, whereas the module DSMM warns of a state of distraction of the driver. In this case, the module DCM decides to activate the function LKS automatically and to display the message "Lane-keeping Support ON".

| **LKSM** | **LCAM** | **DSMM** | **Decision of the DCM** |
|---|---|---|---|
| OFF | - | Distraction detected | LKS activated automatically. Displays message *"Lane-keeping Support ON"* |
| OFF | - | Fatigue detected | LKS activated. Assigns value Max to Torque LKS. Displays message *"DROWSINESS Detected"* |
| ON | - | Distraction detected | Assigns value Max to Torque LKS. Displays message "*LKS Value Max"* |
| ON | - | Fatigue detected | Assigns value Max to Torque LKS. Displays message *"DROWSINESS Detected"* |
| OFF | Vehicle on left side, low risk | - | Turns on Yellow LED |
| OFF | Vehicle on left side, medium risk | - | Turns on Red LED. Issues Acoustic warning |
| OFF | Vehicle on left side high risk | - | Turns on Red LED. Issues Acoustic warning. LKS activated automatically, sets max Torque. |
| ... | ... | ... | ... |

In practice, the system is able to intervene by using a wide range of interventions in order to maintain the vehicle in safety conditions.

Given in what follows are some significant examples of possible interventions by the system:
- generation of a combination of messages, icons or LEDs flashing on the dashboard as a warning;
- intervention on the system ACC (if active), deactivating it in order to prevent any lowering of attention of the driver at the safety distance; alternatively, in order to guarantee maintenance of the highest safety condition, the system DCM can vary the "headway" value of the system ACC, temporarily increasing the safety distance to the maximum value;
- intervention on the module LKSM in order to increase the level of intervention of the active steering torque to the maximum value. In this way, the driver can perceive the active steering torque better, in the case of involuntary exit from the lane or lane change in dangerous conditions;
- automatic turning-off of the audio systems, such as radio or hi-fi devices or handsfree-talking telephone, or else lowering of the volume, thus reducing a possible source of distraction;
- regulation of the air-conditioning system to a lower temperature, or else activation of the fan at a higher speed, to alert the driver on the risk of lack of attention; and
- activation of the electrical safety-belt pretensioner SBP, so as to grip the driver more securely to the seat, preparing him for a possible impact and at the same time warning him of the risk of collision.

Of course, all the aforementioned interventions constitute just a few examples of the possible actions that the module DCM can undertake; other interventions of activation or deactivation can constitute countermeasures useful for increasing the level of safety, as the level of lack of attention detected varies.

The functions described above, provided by the lane-keeping-support module LKSM, lane-change-assistance module LCAM, driver-status-monitoring module DSMM, and decision control module DCM, can be obtained via computer programs, which can reside in one or more electronic processing units, for example of the types described above, integrated together or else distributed over a number of different co-operating units. Said computer programs comprise encoding means for implementing one or more steps of the functions described above, when these programs are run on a computer. Consequently, it is understood that the scope of protection of the present invention extends to said computer programs and moreover to computer-readable media, which comprise a stored message, said computer-readable media comprising program-encoding means for implementation of one or more steps of the functions described above, when said program is run on a computer.

Variant embodiments to the non-limiting example described herein are possible, without thereby departing from the sphere of protection of the present invention, including all the embodiments that for a person skilled in the branch are equivalent.

From the foregoing description the person skilled in the art is able to carry out the invention without introducing any further constructional details. In particular, implementation of the computer programs may be performed on the basis of programming languages which are in themselves known, of any type used in the field of application of the present invention.

## Claims

1. Driving assistance system for vehicles both when travelling along a reference lane and during lane-change manoeuvres, said system comprising:
- a lane-keeping-support module (LKSM), which processes the information coming from a lane-tracking system (LTS), which comprises a front-vision system (VS) and is designed to supply signals indicating assistance when the vehicle is travelling along a lane;
- a lane-change-assistance module (LCAM), which processes the information coming from a lateral-lane-monitoring system (LLMS), which comprises a lateral-vision system (CAM2), and is designed to supply signals indicating assistance when the vehicle carries out lane-change manoeuvres;
further comprising:
a driver-status-monitoring module (DSMM), which processes information coming from a driver-monitoring system (DEMS), which comprises a vision system (CAM1) inside the cab of the vehicle, and is able to generate signals regarding conditions of drowsiness or distraction of the driver;
- a decision control module (DCM), which processes said signals that it receives from said lane-keeping-support module (LKSM), said lane-change-assistance module (LCAM) and said driver-status-monitoring module (DSMM), for applying an active steering torque and for supplying warning signals in the case of onset of situation of emergency and for determining the operation of the following systems on board the vehicle:
- active steering system (SAU);
- adaptive-cruise-control system (ACC);
- heating-ventilation-air-conditioning-control system (HVAC);
- electrical-safety-belt-pretensioning system (SBP);
- infotainment system (INF); and
- acoustic-and-visual-warning devices (AVW);
and wherein said driver-status-monitoring module (DSMM) comprises means for integrating said information coming from a driver-monitoring system (DEMS) with information on the use of on-board devices available via messages on an internal communication network (CAN) and with information coming from said lane-tracking system (LTS), and for identifying improper behaviour, such as for instance an excessively imprecise way of driving, depending on the number of interventions for lane keeping in a certain time interval.

2. Driving assistance system for vehicles according to claim 1, **characterized in that** said lane-keeping-support module (LKSM) comprises means of processing able to determine said assistance when the vehicle is travelling along a lane, on the basis of one or more of the following criteria:
- using the information of the instantaneous position and direction of the vehicle with respect to the lane markings or to the road borders, detected by a lane-tracking system LTS, which processes images supplied by a front camera, preferably installed within the cab or passenger compartment behind the area of the windscreen swept by the windscreen wipers;
- using sensors for detecting activation of the direction indicators;
- processing the information referred to above so as to calculate an appropriate active torque to be applied by means of a steering actuator when the signals issued by the system LTS indicate that the vehicle is about to leave the lane and the direction indicators are not activated;
- using the information coming from the lane-change-assistance module (LCAM) so as to establish whether a lane-change manoeuvre can be undertaken in a safe way; and
- processing the information from the lane-change-assistance module (LCAM) and calculating an appropriate active torque applied by means of the steering actuator, thus assisting the driver to keep on the lane where the vehicle is travelling, even though the direction indicators have been activated, in the case where the lane-change-assistance module (LCAM) has detected a condition that is dangerous for the lane-change manoeuvre.

3. Driving assistance system for vehicles according to claim 2, **characterized in that** said lane-keeping-support module (LKSM) is able to receive information from a satellite global positioning system (GPS), regarding the types of road on which the vehicle is travelling (motorway, trunk road, country road, etc.) and the number of traffic lanes, said lane-keeping-support module (LKSM) comprising means for calculating said active torque to be applied by said steering-actuation unit (SAU) also on the basis of one or more of the following parameters:
- instantaneous position and direction of the vehicle with respect to lane marking or road border signs detected;
- speed of the vehicle;
- radius of curvature of the lane;
- camber of the portion of road on which the vehicle is travelling;
- signals regarding the lateral dynamics of the vehicle that comprise yaw velocity and lateral acceleration;
- weight of the load and presence of trailer;
- maximum active torque set by the driver for actuation of the steering unit;
- instantaneous steering torque applied by the driver; and
- number of lanes and information on the type of road on which the vehicle is travelling, if available, via navigation system.

4. Driving assistance system for vehicles according to claim 2, **characterized in that** said lane-keeping-support module (LKSM) moreover comprises means for processing information regarding the presence or absence of the hands of the driver on the steering wheel, supplied to said decision control module (DCM).

5. Driving assistance system for vehicles according to claim 4, **characterized in that** said information regarding the presence or absence of the hands of the driver on the steering wheel is derived from means for comparing a steering torque applied by the driver and its time derivative with a torque threshold value and a torque-derivative threshold value, respectively; the absence of the hands from the steering wheel being recognized in the case where the torque applied by the driver and its time derivative remain both simultaneously below said threshold values for a certain period of time.

6. Driving assistance system for vehicles according to claim 2, **characterized in that** said lane-keeping-support module (LKSM), comprises means for processing information regarding the "driving style" of the driver, on the basis of the information coming from the lane-tracking system (LTS), identifying improper behaviour, such as for example an excessively imprecise style of driving, depending on the number of interventions for lane keeping in a certain time interval.

7. Driving assistance system for vehicles according to claim **characterized in that** said lane-change-assistance module (LCAM) comprises means for using the information supplied by said lateral-lane-monitoring system (LLMS) and by said lane-tracking system (LTS), for correlating said information with parameters regarding the dynamics of the vehicle, and if it detects a situation of danger it acts on a steering-actuation unit (SAU) and issues visual and acoustic warning signals, said parameters regarding the dynamics of the vehicle being one or more of the following:
- position and direction of the vehicle with respect to the lane of travel;
- presence and relative speed of another vehicle that is approaching on an adjacent lane;
- longitudinal speed of the vehicle;
- steering angle and angular steering velocity;
- activation of direction indicators; and
- steering torque applied by the driver; said situation of danger being detected when there occurs a lateral approach of the vehicle to the lane marking (M) and also the approach of another vehicle along an adjacent lane.

8. Driving assistance system for vehicles according to claim 7, **characterized in that** said position of the vehicle with respect to the lane of travel comprises a lateral distance between the vehicle and said lane marking (M).

9. Driving assistance system for vehicles according to claim 7, **characterized in that** said lateral-vision system (CAM2) in said lane-change-assistance module (LCAM) comprises a digital colour video camera (CAM2) positioned in a rearview mirror driver side (71) or on its support.

10. Driving assistance system for vehicles according to claim 1, **characterized in that** said decision control module (DCM), comprises means for taking decisions of activating or deactivating on-board systems, on the basis of the information received, as well as means for determining intervention for enabling or disabling a support supplied to the driver by said lane-keeping-support module (LKSM) and lane-change-assistance module (LCAM).

11. Driving assistance system for vehicles according to claim 10, **characterized in that** said decision control module (DCM) comprises means for causing one or more of the following interventions:
- generation of a combination of messages, icons or LEDs flashing on a dashboard as a warning;
- intervention on said adaptive-cruise-control system (ACC), if active, deactivating it in order to prevent lowering of attention of the driver at the safety distance; or else in order to guarantee a condition of greater safety, varying a "headway" value of said adaptive-cruise-control system (ACC), increasing temporarily a safety distance to the maximum value;
- intervention on said lane-keeping-support module (LKSM) in order to increase to the maximum value the level of intervention of the active steering torque;
- automatic turning-off of the audio systems, such as radio or hi-fi devices or handsfree-talking telephone, or else lowering of the volume, of said infotainment system (INF);
- regulation of said heating-ventilation-air-conditioning-control system (HVAC) at a lower temperature, or else activation of a fan of said system at a higher speed; and
- activation of said electrical-safety-belt-pretensioning system (SBP) so as to grip the driver more securely to the seat and warn him of an imminent danger.

12. Computer program comprising program-encoding means able to carry out the functions of claims 1 to 11, when said program is run on a computer.

13. Computer-readable medium, comprising a recorded program, said computer-readable medium comprising program-encoding means able to carry out the functions of claims 1 to 11, when said program is run on a computer.

## Patentansprüche

1. Fahrerassistenzsystem für Fahrzeuge sowohl beim Fahren entlang einer Referenzspur als auch bei Spurwechselmanövern, wobei das System umfasst:
- ein Spurhalte-Unterstützungsmodul (LKSM), das die Informationen verarbeitet, die von einem Spurführungssystem (LTS) stammen, welches ein Frontsichtsystem (VS) umfasst und so konstruiert ist, dass es Signale liefert, die eine Hilfestellung geben, wenn das Fahrzeug entlang einer Spur fährt;
- ein Spurwechsel-Assistenzmodul (LCAM), das die Informationen verarbeitet, die von einem Seitenspur-Überwachungssystem (LLMS) stammen, welches ein Seitensichtsystem (CAM2) umfasst und so konstruiert ist, dass es Signale liefert, die eine Hilfestellung geben, wenn das Fahrzeug Spurwechselmanöver durchführt;
ferner umfassend:
ein Fahrerstatus-Überwachungsmodul (DSMM), das Informationen verarbeitet, die von einem Fahrerüberwachungssystem (DEMS) stammen, welches ein Sichtsystem (CAM1) im Innern des Führer-hauses des Fahrzeugs umfasst und zur Erzeugung von Signalen im Hinblick auf Zustände der Müdigkeit oder Ablenkung des Fahrers in der Lage ist;
- ein Entscheidungssteuermodul (DCM), welches die Signale verarbeitet, die es von dem Spurhalte-Unterstützungsmodul (LKSM), dem Spurwechsel-Assistenzmodul (LCAM) und dem Fahrerstatus-Überwachungsmodul (DSMM) empfängt, um ein aktives Lenkmoment aufzubringen und um Warnsignale in dem Fall des Bevorstehens einer Notsituation zu liefern und um die Arbeitsweise der folgenden Systeme an Bord des Fahrzeugs zu bestimmen:
- ein aktives Lenkungssystem (SAU);
- ein aktives Geschwindigkeitsregelsystem (ACC);
- ein Heizungs-, Lüftungs- und Klimaanlagensteuersystem (HVAC);
- ein elektrisches Sicherheitsgurtstraffersystem (SBP);
- ein Infotainment-System (INF); und
- akustische und visuelle Warnvorrichtungen (AVW);
wobei das Fahrerstatus-Überwachungsmodul (DSMM) ein Mittel zum Vereinigen der Informationen, die von einem Fahrerüberwachungssystem (DEMS) stammen, mit Informationen über die Verwendung von Bordvorrichtungen, die über Meldungen in einem internen Kommunikationsnetzwerk (CAN) verfügbar sind, und mit Informationen, die von dem Spurführungssystem (LTS) stammen, umfasst, und zum Identifizieren eines unkorrekten Verhaltens, wie etwa einer übermäßig ungenauen Fahrweise, in Abhängigkeit von der Anzahl von Interventionen zum Spurhalten in einem bestimmten Zeitintervall.

2. Fahrerassistenzsystem für Fahrzeuge nach Anspruch 1,
**dadurch gekennzeichnet, dass**
das Spurhalte-Unterstützungsmodul (LKSM) ein Verarbeitungsmittel umfasst, das zur Bestimmung der Hilfestellung auf der Grundlage eines oder mehrerer der folgenden Kriterien in der Lage ist, während das Fahrzeug entlang einer Spur fährt:
- Verwendung der Informationen der augenblicklichen Position und Richtung des Fahrzeugs mit Bezug auf die Spurmarkierungen oder die Straßenbegrenzungen, die von einem Spurführungssystem (LTS) detektiert werden, welches Bilder verarbeitet, die von einer Front-kamera geliefert werden, die vorzugsweise im Führerhaus oder in der Fahrgastzelle hinter dem Bereich der Windschutzscheibe installiert ist, der von den Scheibenwischern überstrichen wird;
- Verwendung von Sensoren zum Detektieren der Aktivierung der Richtungsanzeiger;
- Verarbeitung der vorstehend erwähnten Informationen, um ein geeignetes aktives Moment zu berechnen, das mit Hilfe eines Lenkungsstellglieds aufgebracht werden soll, wenn die von dem System (LTS) ausgegebenen Signale anzeigen, dass das Fahrzeug im Begriff steht, die Spur zu verlassen und die Richtungsanzeiger nicht aktiviert sind;
- Verwendung der Informationen, die vom Spurwechsel-Assistenzmodul (LCAM) stammen, um festzustellen, ob ein Spurwechselmanöver auf sichere Weise unternommen werden kann; und
- Verarbeitung der Informationen vom Spurwechsel-Assistenzmodul (LCAM) und Berechnung eines geeigneten aktiven Moments, das mit Hilfe des Lenkungsstellglieds aufgebracht wird, womit der Fahrer beim Halten der Spur, auf der das Fahrzeug gerade fährt, unterstützt wird, obwohl die Richtungsanzeiger aktiviert worden sind, in dem Fall, bei dem das Spurwechsel-Assistenzmodul (LCAM) eine Bedingung detektiert hat, die für das Spurwechselmanöver gefährlich ist.

3. Fahrerassistenzsystem für Fahrzeuge nach Anspruch 2,
**dadurch gekennzeichnet, dass**
das Spurhalte-Unterstützungsmodul (LKSM) in der Lage ist, Informationen von einem globalen Satellitenpositionierungssystem (GPS) hinsichtlich der Straßentypen, auf denen das Fahrzeug gerade fährt (Autobahn, Fernstraße, Landstraße usw.), und der Anzahl der Fahrspuren zu empfangen, wobei das Spurhalte-Unterstützungsmodul (LKSM) ein Mittel zur Berechnung des aktiven Moments, das von der Lenkungsbetätigungseinheit (SAU) aufgebracht werden soll, außerdem auf der Grundlage eines oder mehrerer der folgenden Parameter umfasst:
- augenblickliche Position und Richtung des Fahrzeugs mit Bezug auf detektierte Spurmarkierungs- oder Straßenbegrenzungszeichen;
- Geschwindigkeit des Fahrzeugs;
- Kurvenradius der Fahrspur;
- Querneigung des Abschnitts der Straße, auf der das Fahrzeug gerade fährt;
- Signale hinsichtlich der Querdynamiken des Fahrzeugs, die eine Giergeschwindigkeit und eine Querbeschleunigung umfassen;
- Gewicht der Last und Vorhandensein eines Anhängers;
- vom Fahrer eingestelltes maximales aktives Moment zur Betätigung der Lenkungseinheit;
- augenblickliches vom Fahrer aufgebrachtes Lenkmoment; und
- Anzahl der Fahrspuren und Informationen über den Typ der Straße, auf welcher das Fahrzeug gerade fährt, falls verfügbar, über ein Navigationssystem.

4. Fahrerassistenzsystem für Fahrzeuge nach Anspruch 2,
**dadurch gekennzeichnet, dass**
das Spurhalte-Unterstützungsmodul (LKSM) darüber hinaus ein Mittel zum Verarbeiten von Informationen hinsichtlich der Anwesenheit oder der Abwesenheit der Hände des Fahrers auf dem Lenk-rad umfasst, welche an das Entscheidungssteuermodul (DCM) geliefert werden.

5. Fahrerassistenzsystem für Fahrzeuge nach Anspruch 4,
**dadurch gekennzeichnet, dass**
die Informationen hinsichtlich der Anwesenheit oder der Abwesenheit der Hände des Fahrers auf dem Lenkrad von einem Mittel zum Vergleichen eines Lenkmoments, das von dem Fahrer aufgebracht wird, und dessen zeitlicher Ableitung mit einem Momentschwellen-wert bzw. einem Schwellenwert der Ableitung des Moments hergeleitet werden, wobei die Abwesenheit der Hände am Lenkrad in dem Fall erkannt wird, bei dem das von dem Fahrer aufgebrachte Moment und dessen zeitliche Ableitung beide eine bestimmte Zeitspanne lang gleichzeitig unter den Schwellenwerten bleiben.

6. Fahrerassistenzsystem für Fahrzeuge nach Anspruch 2,
**dadurch gekennzeichnet, dass**
das Spurhalte-Unterstützungsmodul (LKSM) ein Mittel zum Verarbeiten von Informationen bezüglich des "Fahrstils" des Fahrers auf der Grundlage der Informationen, die vom Spurführungssystem (LTS) stammen, umfasst, welches ein unkorrektes Verhalten, wie zum Beispiel einen übermäßig ungenauen Fahrstil, in Abhängigkeit von der Anzahl der Interventionen zum Spurhalten in einem bestimmten Zeitintervall identifiziert.

7. Fahrerassistenzsystem für Fahrzeuge nach Anspruch 1,
**dadurch gekennzeichnet, dass**
das Spurwechsel-Assistenzmodul (LCAM) ein Mittel zur Verwendung der Informationen, die von dem Seitenspur-Überwachungssystem (LLMS) und dem Spurführungssystem (LTS) geliefert werden, umfasst, um diese Informationen mit Parametern hinsichtlich der Dynamiken des Fahrzeugs zu korrelieren, und wenn es eine Gefahren-situation detektiert, es auf eine Lenkungsbetätigungseinheit (SAU) einwirkt und visuelle und akustische Warnsignale ausgibt, wobei die Parameter hinsichtlich der Dynamiken des Fahrzeugs einer oder mehrere der folgenden sind:
- Position und Richtung des Fahrzeugs mit Bezug auf die Fahrspur;
- Anwesenheit und Relativgeschwindigkeit eines weiteren Fahrzeugs, das sich auf einer Nachbarspur nähert;
- Längsgeschwindigkeit des Fahrzeugs;
- Lenkwinkel und Lenkwinkelgeschwindigkeit;
- Aktivierung von Richtungsanzeigern; und
- von dem Fahrer aufgebrachtes Lenkmoment;
wobei die Gefahrensituation detektiert wird, wenn eine seitliche Annäherung des Fahrzeugs an die Spurmarkierung (M) und außerdem das Näherkommen eines anderen Fahrzeugs entlang einer Nachbarspur auftritt.

8. Fahrerassistenzsystem für Fahrzeuge nach Anspruch 7,
**dadurch gekennzeichnet, dass**
die Position des Fahrzeugs mit Bezug auf die Fahrspur einen seitlichen Abstand zwischen dem Fahrzeug und der Spurmarkierung (M) umfasst.

9. Fahrerassistenzsystem für Fahrzeuge nach Anspruch 7,
**dadurch gekennzeichnet, dass**
das Seitensichtsystem (CAM2) in dem Spurwechsel-Assistenzmodul (LCAM) ein digitale Farbvideokamera (CAM2) umfasst, die in einem fahrerseitigen Rückspiegel (71) oder an dessen Halterung positioniert ist.

10. Fahrerassistenzsystem für Fahrzeuge nach Anspruch 1,
**dadurch gekennzeichnet, dass**
das Entscheidungssteuermodul (DCM) ein Mittel zum Treffen von Entscheidungen zum Aktivieren oder Deaktivieren von Bordsystemen auf der Grundlage der empfangenen Informationen, sowie ein Mittel zum Bestimmen einer Intervention umfasst, um eine von dem Spurhalte-Unterstützungsmodul (LKSM) und dem Spurwechsel-Assistenzmodul (LCAM) an den Fahrer gelieferte Unterstützung freizugeben oder zu unterbinden.

11. Fahrerassistenzsystem für Fahrzeuge nach Anspruch 10,
**dadurch gekennzeichnet, dass**
das Entscheidungssteuermodul (DCM) ein Mittel zum Veranlassen einer oder mehrerer der folgenden Interventionen umfasst:
- Erzeugung einer Kombination aus Meldungen, Symbolen oder LEDs, die auf einem Armaturenbrett als Warnung aufleuchten;
- Eingriff in das adaptive Geschwindigkeitsregelsystem (ACC), um es zu deaktivieren, wenn es aktiv ist, um zu verhindern, dass die Aufmerksamkeit des Fahrers auf den Sicherheitsabstand absinkt, oder ansonsten das Variieren eines "Vorausfahr"-Werts des adaptiven Geschwindigkeitsregelsystems (ACC), wobei ein Sicherheitsabstand temporär auf den Maximalwert erhöht wird, um einen Zustand mit größerer Sicherheit zu garantieren;
- Eingriff in das Spurhalte-Unterstützungsmodul (LKSM), um den Maximalwert des Interventionsniveaus des aktiven Lenkmoments zu erhöhen;
- automatisches Abschalten der Audiosysteme, wie etwa von Radio- oder HiFi-Vorrichtungen oder einer Freisprechtelefonanlage, oder ansonsten das Absenken der Lautstärke des Infotainmentsystems (INF);
- Regeln des Heizungs-, Lüftungs- und Klimaanlagen-Steuersystems (HVAC) auf eine niedrigere Temperatur, oder ansonsten die Aktivierung eines Ventilators des Systems mit einer höheren Geschwindigkeit; und
- Aktivierung des elektrischen Sicherheitsgurtstraffersystems (SBP), um den Fahrer sicherer an den Sitz zu binden und ihn vor einer bevorstehenden Gefahr zu warnen.

12. Computerprogramm, das ein Programmcodierungsmittel umfasst, das in der Lage ist, die Funktionen der Ansprüche 1 bis 11 auszuführen, wenn das Programm auf einem Computer laufen gelassen wird.

13. Computerlesbares Medium, das ein aufgezeichnetes Programm umfasst, wobei das computerlesbare Medium ein Programmcodierungsmittel umfasst, das in der Lage ist, die Funktionen der Ansprüche 1 bis 11 auszuführen, wenn das Programm auf einem Computer laufen gelassen wird.

## Revendications

1. Système d'assistance au conducteur dans des véhicules aussi bien en déplacement le long d'une voie de référence qu'au cours de manoeuvres de changement de voie, ledit système comprenant :
- un module d'aide à la tenue de route (LKSM), qui traite les informations provenant d'un système de suivi de voie (LTS), qui comprend un système de vision avant (VS) et est conçu pour fournir des signaux indiquant une assistance lorsque le véhicule se déplace le long d'une voie ;
- un module d'assistance au changement de voie (LCAM), qui traite les informations provenant d'un système de surveillance de voie latérale (LLMS), qui comprend un système de vision latérale (CAM2), et est conçu pour fournir des signaux indiquant une assistance lorsque le véhicule effectue des manoeuvres de changement de voie ;
comprenant en outre :
un module de surveillance de l'état du conducteur (DSMM), qui traite des informations provenant d'un système de surveillance du conducteur (DEMS), qui comprend un système de vision (CAM1) à l'intérieur de la cabine du véhicule, et est apte à générer des signaux concernant des conditions de somnolence ou de distraction du conducteur ;
- un module de commande de décision (DCM), qui traite lesdits signaux qu'il reçoit dudit module d'aide à la tenue de route (LKSM), dudit module d'assistance au changement de voie (LCAM) et dudit module de surveillance de l'état du conducteur (DSMM), pour appliquer un couple de direction actif et pour fournir des signaux d'avertissement dans le cas de l'apparition d'une situation d'urgence et pour déterminer le fonctionnement des systèmes suivants à bord du véhicule :
-- système de direction active (SAU) ;
-- système de régulation de vitesse adaptative (ACC) ;
-- système de régulation de chauffage, de ventilation et de climatisation (HVAC) ;
-- système de pré-tension électrique de ceinture de sécurité (SBP) ;
-- système d'information et de divertissement (INF) ; et
-- dispositifs d'avertissement acoustique et visuel (AVW).
et dans lequel ledit module de surveillance de l'état du conducteur (DSMM) comprend un moyen pour intégrer lesdites informations provenant d'un système de surveillance du conducteur (DEMS) avec des informations sur l'utilisation de dispositifs embarqués disponibles par l'intermédiaire de messages sur un réseau de communication interne (CAN) et avec des informations provenant dudit système de suivi de voie (LTS), et pour identifier un comportement inapproprié, comme par exemple une conduite trop imprécise, en fonction du nombre d'interventions de tenue de route dans un certain intervalle de temps.

2. Système d'assistance au conducteur dans des véhicules selon la revendication 1, **caractérisé en ce que** ledit module d'aide à la tenue de route (LKSM) comprend un moyen de traitement apte à déterminer ladite assistance lorsque le véhicule se déplace le long d'une voie, sur la base d'un ou plusieurs des critères suivants :
- l'utilisation des informations de la position instantanée et de la direction instantanée du véhicule par rapport aux marquages de voie ou aux frontières de route, détectés par un système de suivi de voie (LTS), qui traite des images fournies par une caméra avant, de préférence installée à l'intérieur de la cabine ou du compartiment passager derrière la zone du pare-brise balayée par les essuie-glaces ;
- l'utilisation de capteurs pour détecter une activation des indicateurs de direction ;
- le traitement des informations susmentionnées pour calculer un couple actif approprié à appliquer au moyen d'un actionneur de direction lorsque les signaux émis par le système LTS indiquent que le véhicule est sur le point de quitter la voie et que les indicateurs de direction ne sont pas activés ;
- l'utilisation des informations provenant du module d'assistance au changement de voie (LCAM) afin d'établir si une manoeuvre de changement de voie peut être entreprise d'une manière sûre ; et
- le traitement des informations provenant du module d'assistance au changement de voie (LCAM) et le calcul d'un couple actif approprié appliqué au moyen de l'actionneur de direction, pour aider le conducteur à garder la voie dans laquelle le véhicule se déplace, même si les indicateurs de direction ont été activés, dans le cas où le module d'assistance au changement de voie (LCAM) a détecté une condition qui est dangereuse pour la manoeuvre de changement de voie.

3. Système d'assistance au conducteur dans des véhicules selon la revendication 2, **caractérisé en ce que** ledit module d'aide à la tenue de route (LKSM) est apte à recevoir des informations d'un système de positionnement global par satellite (GPS), en ce qui concerne les types de routes sur lesquelles le véhicule se déplace (autoroutes, routes nationales, routes départementales, etc.) et le nombre de voies de circulation, ledit module d'aide à la tenue de route (LKSM) comprenant un moyen pour calculer ledit couple actif à appliquer par ladite unité d'actionnement de direction (SAU) également sur la base d'un ou plusieurs des paramètres suivants :
- la position instantanée et la direction instantanée du véhicule par rapport aux signes de marquage de voie ou de frontière de route détectés ;
- la vitesse du véhicule ;
- le rayon de courbure de la voie ;
- l'inclinaison de la portion de route sur laquelle le véhicule se déplace ;
- les signaux concernant la dynamique latérale du véhicule comprenant la vitesse angulaire et l'accélération latérale ;
- le poids de la charge et la présence d'une remorque ;
- le couple actif maximal réglé par le conducteur pour l'actionnement de l'unité de direction ;
- le couple de direction instantanée appliqué par le conducteur ; et
- le nombre de voies et les informations sur le type de route sur laquelle le véhicule se déplace, si disponibles, par l'intermédiaire d'un système de navigation.

4. Système d'assistance au conducteur dans des véhicules selon la revendication 2, **caractérisé en ce que** ledit module d'aide à la tenue de route (LKSM) comprend en outre un moyen pour traiter des informations concernant la présence ou l'absence des mains du conducteur sur le volant, fournies audit module de commande de décision (DCM).

5. Système d'assistance au conducteur dans des véhicules selon la revendication 4, **caractérisé en ce que** lesdites informations concernant la présence ou l'absence des mains du conducteur sur le volant sont dérivées d'un moyen pour comparer un couple de direction appliqué par le conducteur et sa dérivée dans le temps respectivement à une valeur de seuil de couple et une valeur de seuil de dérivée de couple ; l'absence des mains sur le volant étant reconnue dans le cas où le couple appliqué par le conducteur et sa dérivée dans le temps restent simultanément au-dessous desdites valeurs de seuil pendant une certaine période de temps.

6. Système d'assistance au conducteur dans des véhicules selon la revendication 2, **caractérisé en ce que** ledit module d'aide à la tenue de route (LKSM) comprend un moyen pour traiter des informations concernant le « style de conduite » du conducteur, sur la base des informations provenant du système de suivi de voie (LTS), en identifiant un comportement inapproprié, comme par exemple un style de conduite trop imprécis, en fonction du nombre d'interventions de tenue de route dans un certain intervalle de temps.

7. Système d'assistance au conducteur dans des véhicules selon la revendication 1, **caractérisé en ce que** ledit module d'assistance au changement de voie (LCAM) comprend un moyen pour utiliser les informations fournies par ledit système de surveillance de voie latérale (LLMS) et par ledit système de suivi de voie (LTS), pour effectuer la corrélation desdites informations avec des paramètres concernant la dynamique du véhicule, et s'il détecte une situation de danger, il agit sur une unité d'actionnement de direction (SAU) et il émet des signaux d'avertissement visuel et acoustique, lesdits paramètres concernant la dynamique du véhicule étant un ou plusieurs des paramètres suivants :
- la position et la direction du véhicule par rapport à la voie de déplacement ;
- la présence et la vitesse relative d'un autre véhicule approchant sur une voie adjacente ;
- la vitesse longitudinale du véhicule ;
- l'angle de direction et la vitesse de direction angulaire ;
- l'activation des indicateurs de direction ; et
- le couple de direction appliqué par le conducteur ;
ladite situation de danger étant détectée lorsqu'il se produit une approche latérale du véhicule vers le marquage de voie (M) et également l'approche d'un autre véhicule le long d'une voie adjacente.

8. Système d'assistance au conducteur dans des véhicules selon la revendication 7, **caractérisé en ce que** ladite position du véhicule par rapport à la voie de déplacement comprend une distance latérale entre le véhicule et ledit marquage de voie (M).

9. Système d'assistance au conducteur dans des véhicules selon la revendication 7, **caractérisé en ce que** ledit système de vision latérale (CAM2) dans ledit module d'assistance au changement de voie (LCAM) comprend une caméra vidéo couleur numérique (CAM2) positionnée sur un côté conducteur de rétroviseur (71) ou sur son support.

10. Système d'assistance au conducteur dans des véhicules selon la revendication 1, **caractérisé en ce que** ledit module de commande de décision (DCM) comprend un moyen pour prendre des décisions d'activation ou de désactivation de systèmes embarqués, sur la base d'informations reçues, ainsi qu'un moyen pour déterminer une intervention pour activer ou désactiver une aide fournie au conducteur par ledit module d'aide à la tenue de route (LKSM) et ledit module d'assistance au changement de voie (LCAM).

11. Système d'assistance au conducteur dans des véhicules selon la revendication 10, **caractérisé en ce que** ledit module de commande de décision (DCM) comprend un moyen pour provoquer une ou plusieurs des interventions suivantes :
- la génération d'une combinaison de messages, d'icônes ou de DEL clignotant sur un tableau de bord en tant qu'avertissement ;
- l'intervention sur ledit système de régulation de vitesse adaptative (ACC), s'il est actif, en le désactivant pour empêcher une baisse d'attention du conducteur à la distance de sécurité ; ou sinon pour garantir une condition de sécurité accrue, en faisant varier une valeur « d'avancée » dudit système de régulation de vitesse adaptative (ACC), en augmentant provisoirement une distance de sécurité à la valeur maximale ;
- l'intervention sur ledit module d'aide à la tenue de route (LKSM) pour augmenter le niveau d'intervention du couple de direction active à la valeur maximale ;
- l'arrêt automatique des systèmes audio, comme les dispositifs de radio ou de hi-fi ou le téléphone mains libres, ou sinon la réduction du volume dudit système d'information et de divertissement (INF) ;
- l'ajustement dudit système de régulation de chauffage, de ventilation et de climatisation (HVAC) à une température inférieure, ou sinon l'activation d'un ventilateur dudit système à une vitesse supérieure ;
- l'activation dudit système de pré-tension électrique de ceinture de sécurité (SBP) pour serrer davantage le conducteur sur le siège et le prévenir d'un danger imminent.

12. Programme informatique comprenant un moyen de codage de programme apte à effectuer les fonctions des revendications 1 à 11, lorsque ledit programme est exécuté sur un ordinateur.

13. Support lisible par ordinateur, comprenant un programme enregistré, ledit support lisible par ordinateur comprenant un moyen de codage de programme apte à effectuer les fonctions des revendications 1 à 11, lorsque ledit programme est exécuté sur un ordinateur.
